# EUROPEAN PATENT APPLICATION

(11) **EP 4 617 966 A1**
(43) Date of publication of application: **17.09.2025**
(21) Application number: 25159237.4
(22) Date of filing: 20.02.2025
(51) Int. Cl.: G06Q 10/0631, G06Q 10/0633

(54) **DEPENDENCY LINKED TASKS**

(30) Priority: 12.03.2024 US 202418602044
(71) Applicant: Honeywell International Inc., Charlotte, NC 28202 (US)
(72) Inventor: SINGH, Ankit, Charlotte, 28202 (US); FAINOR, Judith, Charlotte, 28202 (US); SNEED, Timothy, Charlotte, 28202 (US); PAILA, Lakshminarayana, Charlotte, 28202 (US); McCARTHY, Stephen, Charlotte, 28202 (US)
(74) Representative: Haseltine Lake Kempner LLP

(57) **Abstract**

Approaches for correlating tasks across different monitored processes are described. In an example, for a first task and a second task implemented within an organization, a correlation parameter is obtained. The correlation parameter is to link the first task to the second task and is to indicate that initiation of the first task is to be caused upon completion of the second task. Thereafter, a first status information and second status information of the first task and second task, respectively, is determined. The correlation parameter, the first status information and the second status information may be processed to determine a correlated status of the first task with respect to the second task. Based on the correlated status, a visual indicator depicting a logical association of a pendency of the first task with a pendency of the second task, may be generated.

## Description

### BACKGROUND

Any organization within an industry vertical may implement a plurality of processes. A process may be implemented in stages wherein each stage may include one or more interrelated tasks or activities that may be performed to achieve a process objective or an end result. Examples of a process objective includes, but is not limited to, a product which is manufactured, services rendered, information processed, or any other activity that may be performed for accomplishing predefined functional or operational tasks within the organization. The processes may be implemented manually or may be automated (either completely or partially) by way of instructions, executable on processor-based systems. In some instances, the processes may be monitored through monitoring applications. The monitoring applications may then report a variety of metrics, which may be represented on a user interface or visual dashboard.

### BRIEF DESCRIPTION OF FIGURES

Systems and/or methods, in accordance with examples of the present subject matter are now described and with reference to the accompanying figures, in which:
FIG. 1 illustrates a system for correlating tasks across different monitored processes, as per an example;
FIG. 2 illustrates an environment within an organization, implementing a system for correlating tasks across different monitored processes, as per an example;
FIG. 3 illustrates a workflow and task management system for correlating tasks across different monitored processes, as per another example;
FIG. 4 illustrates an example user interface rendered by a workflow and task management system, as per an example;
FIGS. 5A-5B illustrates further examples of user interface rendered by a task management system;
FIG. 6 illustrates a configuration dashboard of a task management system, as per an example;
FIG. 7 illustrates a method for correlating tasks across different monitored processes, as per an example;
FIG. 8 illustrates another method for correlating tasks across different monitored processes, as per another example; and
FIG. 9 illustrates a system environment implementing a non-transitory computer readable medium for correlating tasks across different monitored processes, as per an example.

### DETAILED DESCRIPTION

An organization within an industry vertical may implement a plurality of processes, that in turn may be implemented in stages with each stage including one or more interrelated tasks or activities. Such tasks may be performed periodically to achieve one or more intermediate outcomes within a scheduled period. A stage may be considered as completed when a set of tasks included within the stage are completed. Between different stages, an intermediate outcome from a prior stage may serve as an input for a subsequent stage. Such a process may continue till a process objective, or an end result, is achieved. As mentioned previously, the process objective may either be a product which is manufactured, services rendered, information processed, or any activity that may be performed for accomplishing predefined functional or operational tasks within an organization. Examples of such operational activities include, but are not limited to, manufacturing activities, sales activities, advertising activities, quality management activities, and marketing activities. The processes may be implemented manually or may be automated (either completely or partially) by way of instructions, executable on processor-based systems, or programmed machines or equipment.

For sake of efficiency, predictability and manageability, the tasks within a given stage may be regimented into ordered steps, referred to as a workflow, for accomplishing the process objective. Workflows may represent the manner in which the different tasks or activities for a given stage are to be performed, in a logical manner. The various stages of any workflow for a given process may be tracked by way of computer implemented monitoring applications. Such applications may monitor tasks or activities that form a part of the process. The status or progress of the tasks being monitored may be determined and reported by such monitoring applications.

The status may be depicted through indicators or metrics to specific personnel within the organizations. Such personnel, depending on the status or progress of the monitored stage, may undertake other decisional measures for efficient completion of the stage being monitored. Generally, monitoring of workflow of a given stage is performed using a corresponding monitoring application which may be adapted or configured to assess the status of the corresponding activities or tasks. The status of the tasks may be captured or represented through a variety of parameters or attributes that may be obtained through the monitoring of the tasks. For example, such a status may be determined based on values pertaining to the parameters or attributes.

It may be noted that a given monitoring application may be adapted to monitor a predefined stage of the process, and as such, may not be suitable to monitor tasks of other stages. Such a situation arises owing to the different types of parameters and attributes that may have to be monitored for the different stages. As a result, different applications may be utilized for monitoring different stages of a given process. Multiple monitoring applications, for ease of reference and review, may be linked with a user interface wherein the output or reported metrics provided by the different monitoring applications may be presented in a different presentation formats. Such user interfaces (which are also referred to as dashboards) provide a summary or snapshot of the different states of the tasks, as reported by the different monitoring applications. The interfaces may be programmed with other executable instructions that may process the reported metrics generated by the monitoring applications to present information.

Managing multiple tasks and monitoring applications poses several technical challenges. The different applications may provide information pertaining to their respective monitored stage. This aspect is explained with respect to a stages A and B which may be monitored by respective Applications A' and B'. Each of the stages A and B may implement one or more tasks. In the present instance, the Application A' may determine that one task is pending in the stage A for completion, whereas Application B' may report that five tasks are pending in the stage B. Any personnel who are to review the implemented process (i.e., comprising stages A and B) based on the reported metrics may initially conclude stage B may require intervention based on the number of pending tasks. However, if all the tasks in stage B are dependent on the task in stage A to complete, then an intervention may be necessary for the task in stage A. It may be noted that since the reported metrics may be specific to the corresponding stage, any insight that may be gathered may be relevant to the corresponding stage and hence may not be suitable for resolving any bottlenecks that may be present in or across different stages. As may be evident from the foregoing example, different types of monitoring applications may not be suitable for assessing the interdependence of the different tasks between stages, nor may ascertain any interrelation between workflows of the different stages that form a part of the process.

Approaches for correlating tasks across different monitored processes are described. As described previously, the workflows may include different stages of a process which are monitored by one or more monitoring applications. Each of the stages may include one or more tasks. The monitoring applications may determine whether some or all tasks within a given stage have been performed or completed. The monitoring applications, during their operation, may report tasks as either completed or pending for completion. When incorporated into a visual dashboard, the different monitoring applications may provide a snapshot of the various stages and provide indications of the pendency of one or more tasks within said stages. The correlation of the different tasks across the different workflows allows accurately ascertaining the status of a given task by determining the status (e.g., whether completed or pending) of other tasks which may be correlated with said given task. The correlation of the different tasks correlated with each other across different workflows may be represented on the dashboard or a user interface.

To this end, a workflow management system may be implemented. The implementation of such an example workflow management system is described in the context of a process comprising at least a first stage and a second stage. Although described with reference to the first stage and the second stage, the process may include a plurality of other stages as well, without limitation. Continuing with the present explanation, the first stage and the second stage may include a first task and a second task. The first task may be associated with a first task ID and a first status. In a similar manner, the second task may be associated with a second task ID and a second status. The first status and the second status may respectively indicate the status of the first task and the second task. The status may indicate whether the task (i.e., the task to which the status corresponds) has been completed or whether it is pending for completion.

Where the current task is dependent on another task, the current task will be initiated when the associated dependent task has been completed. To this end, the workflow management system may associate the first task and the second task with a correlation parameter. The correlation parameter may be used for indicating another task on which a current task may be dependent. For example, a correlation parameter associated with the first task linking it to a second task would imply that the initiation of the first task will occur once the second task has completed.

Proceeding further, the workflow management system (hereinafter referred to as the system) may obtain the first task ID, the first status and the corresponding correlation parameter for the first task. In a similar manner, the system may obtain the second task ID, the second status and the correlation parameter for the second task. Based on first status, second status and the correlation parameter of the first task (which references the second task), the system may determine a correlated status of the first task with respect to the second task. The correlated status of the first task would indicate whether the first task is pending (if determined to be pending) owing to the pendency of the second task.

In an example, the system may generate a visual indicator based on the correlated status of the first task, wherein the visual indicator is to depict a logical association of a pendency of the first task with a pendency of the second task. If the first task is depicted as pending or yet to be initiated, the system may control the appearance of the visual indicator depending on whether the second task has been initiated or not. For example, the visual indicator for the first task and the second task may be in the form of common shape, common color, common annotation, a notional connector, or a combination thereof.

If the second task has not yet been initiated, the same may be referred for decisional intervention that may be exercised by an administrator. In another example, one or more control instructions may be generated if the second task is pending. Such control instructions when executed may initiate the second task. It may be noted that such control instructions may be generated based on predefined programmable instructions, which may be programmed to execute either in response to a command from a user, or in response to occurrence of one or more conditions or events.

The visual representations depicting the first task and the second task may be rendered on a user interface or a dashboard. Along with the visual representations, the user interface may depict the status of the first task and the second task, while depicting the dependency of the tasks. A user of the dashboard may review the status of the different tasks and ascertain whether the pendency of one or more tasks is linked to other correlated tasks. It may be noted that although provided in the context of the first stage and the second stage being monitored by a first application and a second application, respectively, the above approaches may be extended to any number of stages with multiple tasks that are monitored by a plurality of monitoring applications. The monitoring applications may also be used to monitor multiple other processes being implemented and monitored within the organization. Such other examples would also be within the scope of the present subject matter.

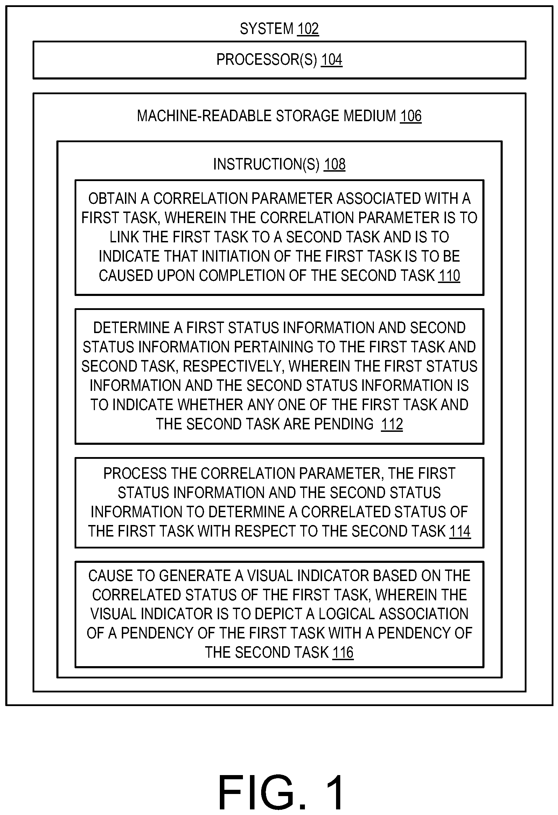

FIG. 1 illustrates system 102 for correlating tasks across different monitored workflows, as per one example. The workflow includes a plurality of stages of a process, with the stages and their constituent tasks being monitored by one or more monitoring applications. Within each stage, a set of tasks is defined. The monitoring applications systematically evaluate the execution and completion status of one or more tasks in a given stage. The monitoring applications may continuously report the status of the tasks within each stage, categorizing them as either completed or pending completion. In an example, the monitoring applications may store data or other metrics corresponding to the tasks within the different stages of a given process in a separate repository or database (not shown in FIG. 1). The system 102 may fetch these metrics, analyze them and render the same analytics on a visual dashboard.

The system 102 includes a processor 104 and a machine-readable storage medium 106 which is coupled to, and accessible by, the processor 104. The system 102 may be implemented in any computing system, such as a storage array, server, desktop or a laptop computing device, a distributed computing system, or the like. Although not depicted, the system 102 may include other components, such as interfaces to communicate over the network with other systems or data repositories, communicate with external storage or computing devices, display, input/output interfaces, operating systems, applications, data, and other software or hardware components (all of which have not been depicted for sake of conciseness). In an example, machine-readable storage medium 106 may further include instruction(s) 108.

The processor 104 may be implemented as a dedicated processor, a shared processor, or a plurality of individual processors, some of which may be shared. The machine-readable storage medium 106 may be communicatively connected to the processor 104. Among other capabilities, the processor 104 may fetch and execute computer-readable instructions, including instruction(s) 108, stored in the machine-readable storage medium 106. The machine-readable storage medium 106 may include non-transitory computer-readable medium including, for example, volatile memory such as RAM (Random Access Memory), or non-volatile memory such as EPROM (Erasable Programmable Read Only Memory), flash memory, and the like.

In operation, the processor 104 may fetch and execute instruction(s) 108 for performing one or more actions, as discussed further. In an example, the execution of instructions 110 may retrieve or obtain a correlation parameter associated with a first task and a second task. It may be noted that the first task and the second task may be tasks of a process which may be implemented within an organization. In an example, the correlation parameter is to link the first task to the second task. When linked, the correlation parameter may indicate that initiation of the first task is to be caused upon completion of the second task.

Continuing further, the instructions 112 may be executed to determine a first status information and second status information pertaining to the first task and second task, respectively. The first status information and the second status information may indicate whether the first task or the second task, are pending. It may be noted that the instructions 110 and 112 may be executed concurrently or in any order without deviating from the scope of the present subject matter.

With the first status information and the second status information obtained, the instructions 114 may be executed to process the correlation parameter, the first status information and the second status information to determine a correlated status of the first task with respect to the second task. In an example, the correlated status of the first task (with respect to the second task) may indicate whether the second task (which is pending) has been preventing the first task from completing. Once the correlated status is determined, the instructions 116 may be executed. The instructions 116 when executed may cause generation of a visual indicator based on the correlated status of the first task. Amongst other things, the visual indicator depicts a logical association of a pendency of the first task with a pendency of the second task. In an example, based on the status conveyed through the visual indicator, decisional intervention may be affected by an appropriate stakeholder.

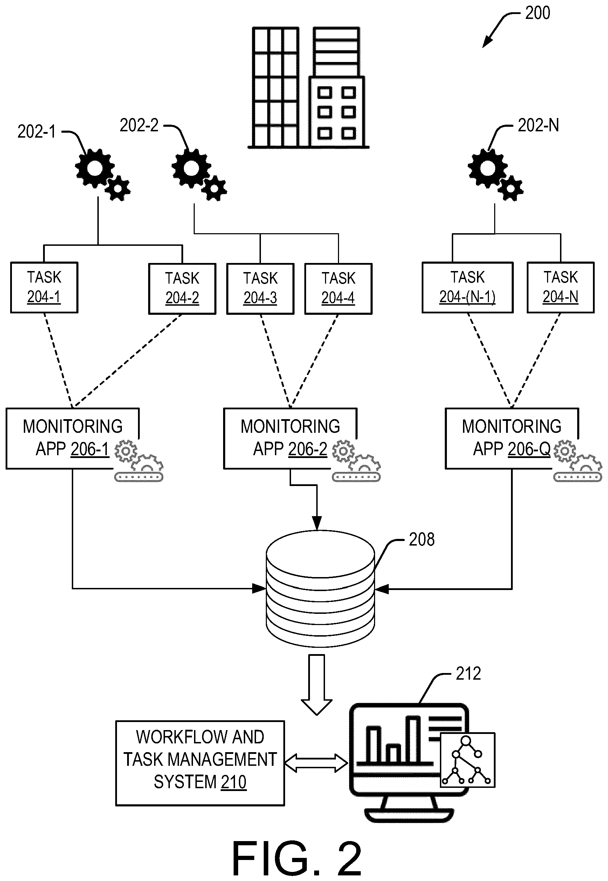

The above aspects in relation to the system 102 are further discussed in detail in relation to FIG. 2. FIG. 2 illustrates an environment comprising an example organization environment 200 and its various elements. The example organization environment 200 may implement a plurality of stages 202-1, 2,...., N (collectively referred to as stages 202) of a given process. Although the present example is explained in the context of a process implementing the different stages 202, the same is not to be considered as a limitation. The stages 202 may be directed towards achieving an objective or an end result. Examples of such objectives include, but are not limited to, manufacturing of products or goods, rendering of services, processing of information, for research, development in different technical fields such as life sciences, engineering, computing, and such.

The different processes within the organization may be implemented by way of multiple stages. Each stage associated with the corresponding process, in turn may include one or more tasks. The tasks may correspond to predefined steps that are to be implemented or performed for the eventual completion of the stage, and the process. The flow or order of the different tasks may be such so to ensure that the process may be implemented in a performant manner. The order in which the tasks are defined is referred to as a workflow. Workflows may represent the manner in which the different tasks or activities for a given stage are to be performed, in a logical manner. In addition to providing an ordered structure to the different tasks, the workflow may also be utilized to assess progress of the different stages (or tasks), and may assist in assessing the extent of completion of a given process. For example, the workflow may be characterized by different milestones which may delineate different stages and accordingly serve as a marker to identify which stages have been completed and which stages are yet to be initiated.

In the context of the example illustrated in FIG. 2, the stages 202 may include multiple tasks. For example, the stage 202-1 may include task 204-1, 2, while stage 202-2 may include tasks 204-3, 4 and stage 202-N may include tasks 204-(N-1),..., N. The different stages 202 may be interlinked with each other. For example, initiation of the stage 202-2 may be dependent on the completion of the stage 202-1. At a further granular level, the completion of the tasks within the stage 202-2 may also depend on the completion of the tasks within the stage 202-1. In such a case, any tasks (such as tasks 204-3, 4) within stage 202-2 may initiate once tasks (such as tasks 204-1, 2) within stage 202-1 complete. Although depicted as independent blocks (for purposes of explanation only), each of the tasks 204 may be implemented on specific machinery or systems, or for any other specific infrastructure elements within the organization environment 200.

Proceeding further, the tasks 204 may be monitored through monitoring applications. For example, tasks 204-1,2 may be monitored by monitoring application 206-1, while the tasks 204-3,..., N may be monitored by monitoring applications 206-2,..., Q (collectively referred to as monitoring applications 206). The monitoring applications 206 too may be implemented on separate computing systems or may be deployed on the systems on which the relevant tasks 204 may be implemented.

In operation, the monitoring applications 206 may determine one or more attributes pertaining to the tasks 204 to determine their current status. Such attributes may be reported as metric information or other input that may be provided to the monitoring applications 206. The attributes of tasks 204 which are being performed within machinery, equipment or under control of programmed machines or computing devices, may be captured through one or more sensors (not depicted in FIG. 2) which may be deployed within the machinery, equipment or under control of programmed machines performing such tasks 204. Such sensors may continuously capture various data or metric information which may be then communicated to the monitoring applications 206. Capturing data or metric information pertaining to the different tasks 204 may not be automated. For example, values pertaining to one or more attributes or metric information may be manually recorded, stored, and eventually retrieved by the monitoring applications 206.

The monitoring applications 206 on obtaining metric information, may store the same in repository 208, in a structured or an unstructured format. The metric information stored in the repository 208 may then be retrieved from the repository 208 by the workflow and task management system 210 (referred to as the system 210). The system 210 may retrieve and process the metric information to correlate different tasks, such as tasks 204, to ascertain whether the pendency of any given task is due to, i.e., linked to the pendency of another dependent task. In an example, the correlated parameter once determined may be used for generating one or more visual indicators. The visual indicator, in an example, may depict a logical association between the pending tasks 204. The visual indicator may be rendered in the form of a shape, color, an annotation, a notional connector, or a combination thereof.

In another example, the system 210 may generate control instructions for initiating the pending tasks (from amongst the tasks 204) on which the completion (or initiation) of other tasks is dependent on. In this manner, any bottlenecks that may have been caused owing to such pending tasks may be addressed. The control instructions thus generated may be based on an underlying workflow to which the pending tasks may correspond to. To this end, the system 210 may determine task related parameters of the pending tasks. For the pending tasks, the corresponding workflow may be determined corresponding to which the executable instructions may be generated. In addition to the visual indicators, the system 210 may also generate various analytics based on the metric information that may have been obtained from the repository 208. The analytics may be in the form of graphs or other such intelligible graphics capable of conveying meaningful information corresponding to the underlying metric information. The visual indicators and the analytics may be rendered onto an output display (e.g., display 212) communicatively coupled with the system 210. In an example, the layout or other functional aspects of an interface providing the visual indicators and/or the analytics may be configurable using one or more selectable display elements.

The different elements as illustrated in FIG. 2 may be interconnected using a network (not depicted in FIG. 2). In an example, the network may be a private network or a public network and may be implemented as a wired network, a wireless network, or a combination of a wired and wireless network. The network may also include a collection of individual networks, interconnected with each other and functioning as a single large network, such as the Internet. Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), Long Term Evolution (LTE), and Integrated Services Digital Network (ISDN).

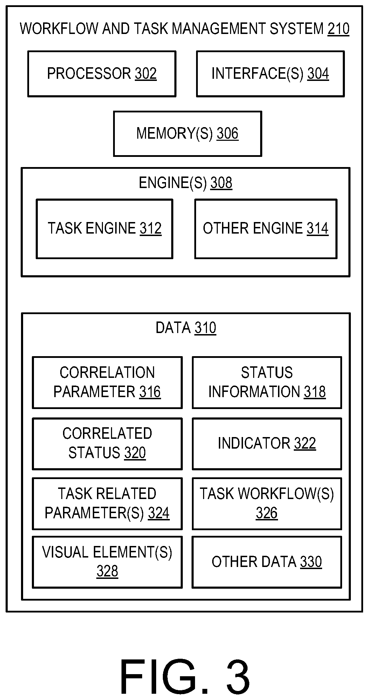

The above approaches implemented in the organization environment 200 are exemplary. Other examples are also possible without deviating from the scope of the present subject matter. These and other examples are further explained in conjunction with FIG. 3. FIG. 3 depicts various functional blocks of the system 210 and illustrates one or more functional blocks of the data processing system 210, as per an example. The system 210 includes a processor 302, interface(s) 304, and memory(s) 306. The processor 302 may be implemented as microprocessors, microcomputers, microcontrollers, digital signal processors, central processing units, state machines, logic circuitries, and/or other devices that manipulate signals based on operational instructions. The interface(s) 304 may allow the connection or coupling of the system 210 with one or more other devices, through a wired (e.g., Local Area Network, i.e., LAN) connection or through a wireless connection (e.g., Bluetooth^{®}, Wi-Fi). The interface(s) 304 may also enable intercommunication between different logical as well as hardware components of the system 210. The interface(s) 304 may also enable the system 210 to communicate with other entities, such as the repository 208, output display 212, or other devices or systems.

The memory(s) 306 may be a computer-readable medium, examples of which include volatile memory (e.g., RAM), and/or non-volatile memory (e.g., Erasable Programmable read-only memory, i.e., EPROM, flash memory, etc.). The memory(s) 306 may be an external memory, or internal memory, such as a flash drive, a compact disk drive, an external hard disk drive, or the like. The memory(s) 306 may further include data which either may be utilized or generated during the operation of the system 210.

The system 210 may further include engine(s) 308 and data 310. The engine(s) 308 may be implemented as a combination of hardware and programming, for example, programmable instructions to implement a variety of functionalities of the engine(s) 308. In examples described herein, such combinations of hardware and programming may be implemented in several different ways. For example, the programming for the engine(s) 308 may be executable instructions. Such instructions may be stored on a non-transitory machine-readable storage medium which may be coupled either directly with the system 210 or indirectly (for example, through networked means). In an example, the engine(s) 308 may include a processing resource, for example, either a single processor or a combination of multiple processors, to execute such instructions. In the present examples, the non-transitory machine-readable storage medium may store instructions that, when executed by the processing resource, implement engine(s) 308. In other examples, the engine(s) 308 may be implemented as electronic circuitry.

The engine(s) 308 includes a task engine 312 and other engine(s) 314. The other engine(s) 314 may further implement functionalities that supplement functions performed by the system 210 or any of the engine(s) 308. The data 310, on the other hand, includes data that is either stored or generated as a result of functions implemented by any of the engine(s) 308 or the system 210. It may be further noted that information stored and available in data 310 may be utilized by the engine(s) 308 for performing various functions to be implemented by the system 210. In an example, data 310 may include correlation parameter 316, status information 318, correlated status 320, indicator 322, task related parameter(s) 324, task workflow(s) 326, visual element(s) 328, and other data 330. It may be noted that such examples of the various functional blocks as depicted in FIG. 3 are indicative. The present approaches may be applicable to other examples without deviating from the scope of the present subject matter.

The operation of the system 210 is explained in conjunction with various elements of the organization environment 200, discussed in conjunction with FIG. 2. In operation, the task engine 312 may determine one or more tasks that may be pending for completion. The tasks may be any one of the tasks 204. As discussed previously, the tasks 204 may correspond to one or more stages 202 of a process, the process being implemented by an organization, such as the organization environment 200. Although the present example has been explained in the context of a single process comprising multiple stages 202, the present approaches are equally applicable for other processes that may be implemented by the organization environment 200.

Returning to the present example, the task engine 312 may determine one or more pending tasks. The present example is explained considering task 204-2 and task 204-3. As depicted in FIG. 2, the task 204-2 corresponds to stage 202-1 whereas task 204-3 corresponds to stage 202-2. The task 204-2 and task 204-3 are monitored by the monitoring applications 206-1 and 206-2, respectively. The monitoring applications 206-1 and 206-2 may monitor progress of the task 204-2 and task 204-3. The information pertaining to the task 204-2 and the task 204-3 may be obtained by the monitoring applications 206-1, 2 and stored in the repository 208. In an example, the information pertaining to the task 204-2 and task 204-3 may include metric information of such tasks. The metric information may provide values of attributes associated with the corresponding tasks. Examples of such attributes include, but are not limited to, status, dependency, identity of an initiating event, application, or user.

The task engine 312 may retrieve information pertaining to the task 204-2 and the task 204-3 from the repository 208. Once obtained, the task engine 312 may process the information from the repository 208 to determine whether the task 204-2 and task 204-3 are correlated. In an example, the correlation may be determined based on a correlation parameter 316. The correlation parameter 316 may depict whether completion of any given task is contingent or dependent on completion of another related or dependent task. As may be understood, within any process which comprises multiple stages, an output of one stage may be utilized or provided as an input for another stage. Tasks which are dependent on each other need not correspond to different stages. Tasks may be dependent on each other within a given stage, without deviating from the scope of the present subject matter.

The task 204-3 is dependent on task 204-2. Therefore, the task 204-3 (which is correlated or dependent on the task 204-2) would be initiated once the task 204-2 has completed. Therefore, any issues that may have prevented, or that may be preventing, the completion of the task 204-2 would consequently also impact the initiation of the task 204-3. The linking of the task 204-2 and task 204-3 (to depict the pendency of the task 204-3 due to task 204-2), may be specified by the correlation parameter 316.

The correlation parameter 316 may be defined by way of linking said tasks by an administrator or may be prescribed by way of programming implementing a workflow which defines the process to be implemented. In an example, the correlation parameter 316 may be defined by the task engine 312 based on one or more predefined rules. In such a case, the predefined rules may be based on one or more criteria related to one or more tasks 204. The task engine 312 may accordingly determine one or more criteria which are common between the tasks 204, and accordingly provide the correlation parameter 316 linking the tasks with common criteria. Examples of such criteria may include, but are not limited to, application or process to which the tasks 204 may correspond to, priority of tasks, or whether the tasks are linked to one or more other common tasks. It may be noted that other criteria may also be relied on for such predefined rules, based on which the task engine 312 may define the correlation parameter 316 between one or more tasks 204. In an example, the criteria may be a task related parameter(s) 324 pertaining to the tasks under consideration.

The task engine 312 may use a machine-learning model for determining the correlation parameter 316 between the tasks 204. Such a machine-learning model may be initially trained based on a set of previously correlated tasks. In such an example training dataset, one exemplary task may be correlated or linked with one or more other exemplary tasks, wherein the exemplary tasks may be correlated based on historical monitoring within the organization environment 200. The training data comprising such correlated tasks may be used by a training engine (not shown in FIGS. 1-3) to train the machine-learning model. The machine-learning model, when trained may then be used by the task engine 312 to define the correlation parameter 316 between one or more pending tasks. In the context of the present example, the training data based on which the machine-learning model is trained may include the one or more criteria (as discussed in the previous example). The training data may also include one or more attributes (that may be historically determined through monitoring applications 206). Other parameters pertaining to the tasks 204 may also form part of the training data based on which the machine-learning model may be trained. When trained, the task engine 312 using the trained machine-learning model may accordingly determine the correlation parameter 316 of the tasks 204.

Once the correlation parameter 316 is determined, the task engine 312 may determine status information 318 of the task 204-2 and the task 204-3. The status information 318, in an example, may indicate the status of the corresponding tasks. The status information 318 may depict whether any one or more of the tasks 204 are pending or completed. With the status information 318 of the task 204-2 and the task 204-3 determined, the task engine 312 may process the status information 318 and the correlation parameter 316 to determine a correlated status 320 of the task 204-2 and the task 204-3. The correlated status 320, in an example, may be used to depict whether the pendency of any given task is due to the pendency of another related task.

If the task 204-2 and the task 204-3 are pending, the correlated status 320 may depict that the pendency of the task 204-3 is owing to the pendency of the task 204-2. For example, the correlated status 320 may be captured as a flag or a similar value within the system 210. Continuing further, the correlated status 320 may be set (say to '1') for the pending task 204-2 and the task 204-3 to indicate that that the task 204-3 may be pending owing to the pending task 204-2. In instances where the task 204-2 is not pending, but the task 204-3 is pending, the correlated status 320 may be set to '0', depicting that although pending, the task 204-3 may be pending due to other factors but not due to the task(s) to the pendency of some other tasks.

In an example, the correlated status 320 may be used to generate and render indicator 322 on the display device 212 coupled with the system 210. In an example, the indicator 322 is to depict a logical association of a pendency of a first task, say task 204-3, with a pendency of another second task, say the task 204-2. It may be noted that the indicator 322 in such a case may link a visual representation of the task 204-3 to another visual representation of the task 204-2, indicating that the pendency of the task 204-3 is owing to, i.e., linked with, the pendency of the task 204-2. The indicator 322 may be rendered in different visual forms. For example, the indicator 322 may comprise a common shape, common color, common annotation, a notional connector, or a combination thereof. Where correlated, the indicator 322 may be provided for the visual representation of the respective correlated tasks.

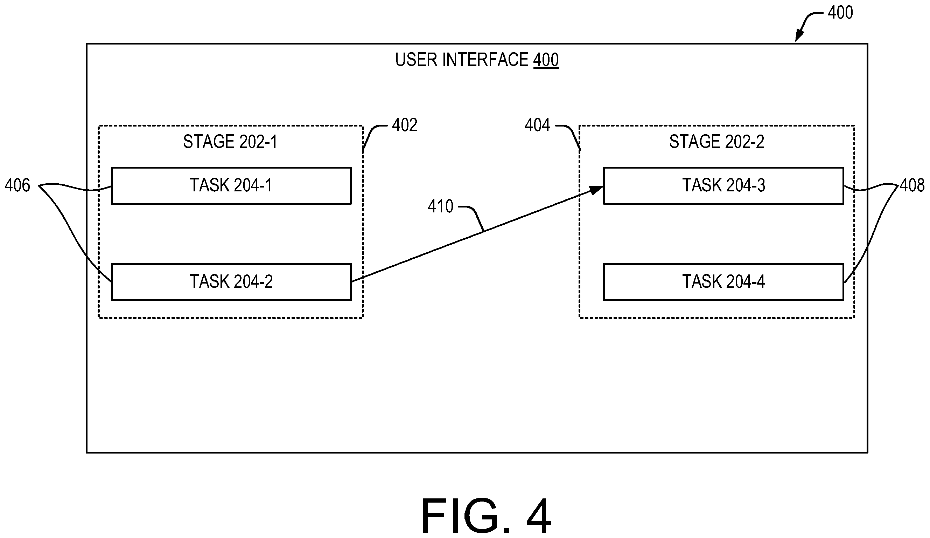

The above approaches are further explained in conjunction with example user interfaces as illustrated in FIGS. 4-5. FIG. 4 depicts an example user interface 400. The user interface 400 may be rendered onto a display device (such as display device 212) which may be coupled with the system 210 and may be rendered based on display instructions generated by the task engine 312. The user interface 400 may include a visual representation or blocks 402 representing a stage, such as the stage 202-1. The user interface 400 may further include another block 404 representing another stage 202-2. It may be noted that although the present example user interface 400 is shown as displaying the blocks 402, 404 for two stages of a given process, the user interface 400 may depict multiple other stages and even processes without deviating from the scope of the present subject matter.

The stages 202-1 and 2, as depicted, may further include multiple tasks 204, such as task 204-1 and task 204-2, and task 204-3, task 204-4, respectively. The respective tasks 204 may again be represented by individual blocks 406 and 408. Similar to the previous examples, the task 204-2 and the task 204-3 may be correlated, with both the task 204-2 and the task 204-3 pending for completion. Since the task 204-2 and the task 204-3 are pending and correlated, the task engine 312 is to generate the indicator 322 which provides a logical and visual association of the task 204-3 to the task 204-2.

In FIG. 4, the indicator 322 is depicted as a straight line 410 which is linking the visual representation of task 204-3 to the task 204-2, with both the task 204-2 and the task 204-3 being represented as blocks. Although the user interface 400 depicts the line 410, it may be noted that other indications may be provided by overlaying the visual representations of the tasks 204 with one or more such indications. For example, various icons or other representative elements may be overlaying the task 204-2 and the task 204-3 to indicate that the task 204-2 and the task 204-3 are pending, with the line 410 depicting the association of the task 204-2 and the task 204-3. Such examples would also fall within the scope of the present subject matter.

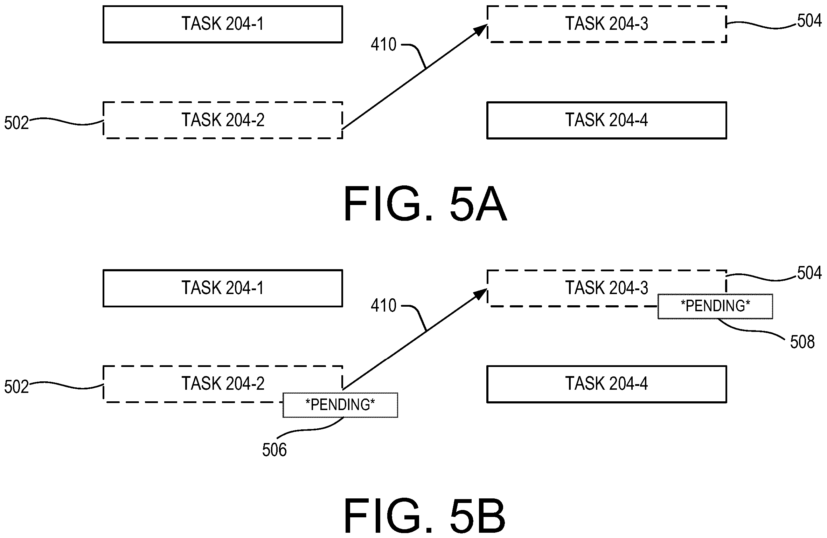

FIGS. 5A-5B provide various other example illustrations of the indicator 322. It is pertinent to note that such example illustrations are indicative and are not to be considered as limiting the scope of the present subject matter in any way. FIG. 5A depicts the indicator 322 by way of representing the task 204-2 and the task 204-3 by a common shape. In the present example, the task 204-2 and the task 204-3 being correlated and dependent, are represented by way of a dotted blocks 502 and 504, respectively, as opposed to solid block representing other tasks. In another example, the blocks 502-504 may be further annotated by additional icon(s) or annotations which may further aid in identifying the pending and the correlated tasks. This is depicted in FIG. 5B in which dotted blocks 502 and 504 are further annotated by information elements depicting one or more information pertaining to the corresponding tasks, such as the task 204-2 and the task 204-3. In the present example, the annotations 506 and 508 may provide information pertaining to the task 204-2 and the task 204-3. Examples of such information may include, but are not limited to, status of the tasks, to which task does such current task depend to, etc. It may be noted that such examples are indicative and are not to be construed as limiting the scope of the present subject matter.

The correlated status 320 may be provided onto the user interface 400 to determine whether the pendency of any given task is due to the pendency of another related or dependent task. In an example, the task engine 312 on determining that the task 204-2 (owing to which task 204-3 was pending) is pending, may generate one or more control instruction to initiate the task 204-2. Initiation of any task may require parameters, values, or inputs, based on which the task may be initiated. In an example, the task engine 312 may obtain one or more task related parameters, values or inputs corresponding to the pending task 204-2. Task related parameter(s) 324 may refer to operational settings or configurations (e.g., nature of input data, operational parameters for the task 204-2, etc.) based on which the task 204-2 may be implemented. The task related parameter(s) 324 may also include parameters such as priorities, details of stage, available resources, dependencies on other tasks, etc.

In the event the tasks 204 are to be implemented by way of processor executable instructions, the task related parameter(s) 324 may be specified as one or more variables in such executable instructions. In an example, the task related parameter(s) 324 could also include various performance indicators that may be relevant to the task 204-2. Task related parameter(s) 324 may therefore include such aspects which would be pertinent to the completion of the task under consideration, which in this case, is task 204-2.

Once the task related parameter(s) 324 is determined, the task engine 312 may identify one or more process workflows. The process workflow includes one or more steps that may have to be performed for completing any given task. The process workflows may be identified based on the task related parameter(s) 324 for the task 204-2. In an example, the determined workflows may be stored in the system 210 as task workflow(s) 326. Once the task workflow(s) 326 for the task 204-2 is determined, the task engine 312 may generate one or more control instructions which when executed may cause initiation of the task 204-2. Once the task 204-2 is completed, the task 204-3 may commence accordingly. In an example, the task workflow(s) 326 may be generated using a variety of systems or tools. For example, the task workflow(s) 326 may be generated using tools for workflow automation, business process management (BPM) software, or the like. In another examples, the task workflow(s) 326 may be generated using a machine-learning based workflow generation model. The example workflow generation model may be trained based on a dataset comprising one or more workflows which are correlated with parameters, such as task related parameter(s) 324. Once trained, the task engine 312 using the trained workflow generation model, may generate one or more task workflow(s) 326 based on the task related parameter(s) 324 corresponding to the pending tasks. These are some examples by way of which the task workflow(s) 326 may be generated; other examples for generating task workflow(s) 326 would also fall within the scope of the claimed subject matter. The manner in which the task 204-2 may be automated and implemented may be applicable for any one of the tasks 204, irrespective of whether they are related to, or not, with the task 204-2.

The task 204-2 (owing to which the task 204-3 was pending) once completed may be annotated with one or more visual prompts. Such a visual prompt may be in the form of an icon. For example, the task 204-2 may be annotated with a first icon when the task 204-2 was pending. On the other hand, when not completed, the task 204-2 may be annotated with another icon. The task engine 312 may also cause the visual appearance of the tasks to change when they are completed. For example, the task engine 312 may change the visual representation of the task 204-2, which may be depicted in a first color when the task 204-2 is pending. Once the task 204-2 has been completed, the task engine 312 may change the visual representation of the task 204-2 to a different color. Other examples which involve changing the visual appearance of one or more tasks may be used without restricting the scope of the present subject matter.

In an example, the user interface 400 may be configurable, wherein which the user interface 400 may be provided with any one or more display elements. The display elements may be of different types. For example, the display elements may include dynamic information elements, static information elements, or control elements. Dynamic information elements may refer to one or more user interface elements which may be populated with dynamic information. Such dynamic information may change in response to a user input. Thus, the dynamic information may include output that may be generated by the system 210 in response to the user input. Such an output may be rendered within the dynamic information element. Examples of such dynamic information elements include a table, graph or a text filed which is populated based on information which may be retrieved from the monitoring applications 206. The dynamic information element may also be used to provide various analytics provided based on the processing of information pertaining to the different tasks 204.

On the other hand, the static information element may refer to elements which may display static information. Examples of such static information elements include, but are not limited to, pictures, icons, static text, or a combination thereof. Such type of information elements may remain consistent during the course of operation of the system 210. The control elements may include one or more functional elements that may be eventually utilized for performing one or more functions. It may be noted that such functions may be implemented within the corresponding control elements, when activated by way of user input. In other instances, the control elements may, when activated, may execute one or more control instructions which may be either integrated within the user interface 400 or may be implemented within system 210 (or any other computing system which may be communicatively coupled with the system 210). The control elements may refer to input controls (such as checkboxes, radio buttons, dropdown lists, list boxes, buttons, toggles, text fields, date field, etc.). The control elements may include one or mor navigational elements that may allow navigational control for the user interface 400.

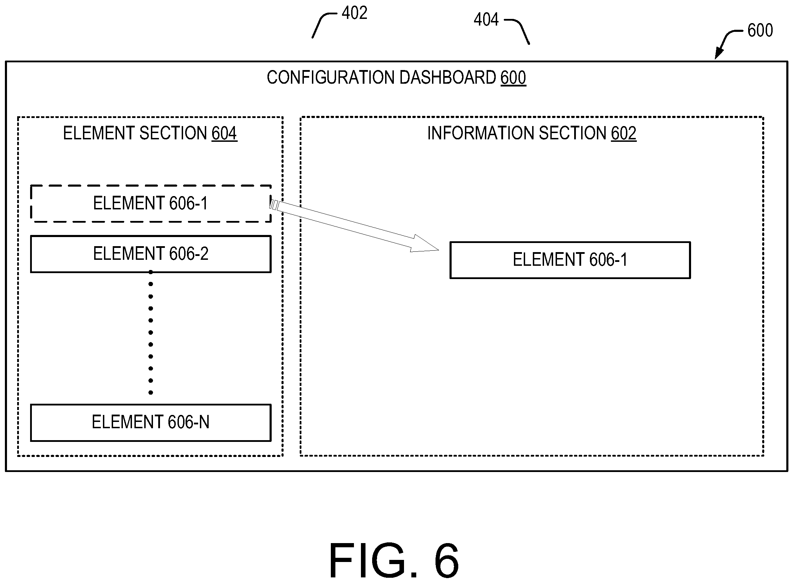

In the present example, the task engine 312 may provide a configuration dashboard. The configuration dashboard may refer to a dashboard user interface which may enable selection of one or more display elements that may be provided on the user interface 400. FIG. 6 provides an example configuration dashboard 600. In an example, the configuration dashboard 600 may be generated or provided by the task engine 312. Continuing further, the configuration dashboard 600 comprises an information section 602 and an element section 604. The information section 602 may be initially blank or may be provided with a set of default display elements. The element section 604 on the other hand lists a set of dynamic information elements, static information elements, and control elements (represented as elements 606-1, 2, ..., N, and collectively referred to as elements 606). The number of the elements 606 may vary based on the type of processes being implemented or based on the stages 202 that may be currently being monitored.

The elements 606 provided by the task engine 312 on the configuration dashboard 600 are selectable based on user input. For example, a system administrator may select any one or more of the elements 606 from the element section 604. Once selected, the selected element(s) may be added to the information section 602. In this manner, the task engine 312 may allow configuring the display elements for the user interface 400. The user interface 400 may also include visual representations corresponding different monitoring applications 206 and a plurality of tasks. The configuration dashboard 600, in an example, may list such elements 606 which may be pertinent to any one of the stages 202. The configuration dashboard 600 may also depict the different stages 202. Selection of any one of the stages 202 may accordingly provide a filtered list of elements 606 which may be relevant for any one of the selected stage from amongst the stages 202. Based on user selection, the selected element may be added to the information section 602. Once the appropriate elements 606 are added to the information section 602, the task engine 312 may render the user interface 400 with the selected elements 606.

In an example, the configuration dashboard 600 may be populated with appropriate elements 606 by the task engine 312 using another machine-learning model. The machine-learning model may be trained based on training data which includes attributes corresponding to different stages 202, or tasks 204 correlated with one or more attributes of display elements. The machine-learning model may be trained by a training engine. Thereafter, the task engine 312 may use the trained machine-learning model to automatically ascertain the elements 606 which are to be selected for a given stage and add the same onto the information section 602 of the configuration dashboard 600. Once configured, the task engine 312 may generate the user interface 400 based on the configuration dashboard 600. It may be noted that other approaches for configuring the configuration dashboard 600 may also be adopted without deviating from the scope of the present subject matter.

Once configured, the user interface 400 may depict one or more elements, such as the elements 606 along with visual representations corresponding to the different stages 202, tasks 204 or the different monitoring applications 206. In an example, the task engine 312 may provide information pertaining to the different tasks 204 to different users. The system 210 may implement an authentication mechanism by way of which users may be authenticated, based on which access to the user interface 400 may be provided. In an example, the number of elements 606, visual representations corresponding to the different stages 202, tasks 204 or the different monitoring applications 206 may be provided based on the user. For example, stages 202, tasks 204 and monitoring applications 206 may be relevant to one or more users.

To this end, the task engine 312 may display a limited set elements 606, visual representations corresponding to the different stages 202, tasks 204 or the monitoring applications 206, based on the authentication of the user. In an example, the user credentials may be linked to the stages 202, tasks 204 or the monitoring applications 206. Depending on the identity of the user logging in, the corresponding user interface 400 may be provided. In an example, the role of the user accessing the user interface 400 may be determined based on which the user interface 400 may be rendered. In certain cases, historical data may be considered to determine which stages 202, tasks 204 or the monitoring applications 206 may be provided when the user interface 400 is rendered. Other conditions, factors, or predefined rules, may also be used to provide the user interface 400 without deviating from the scope of the present subject matter.

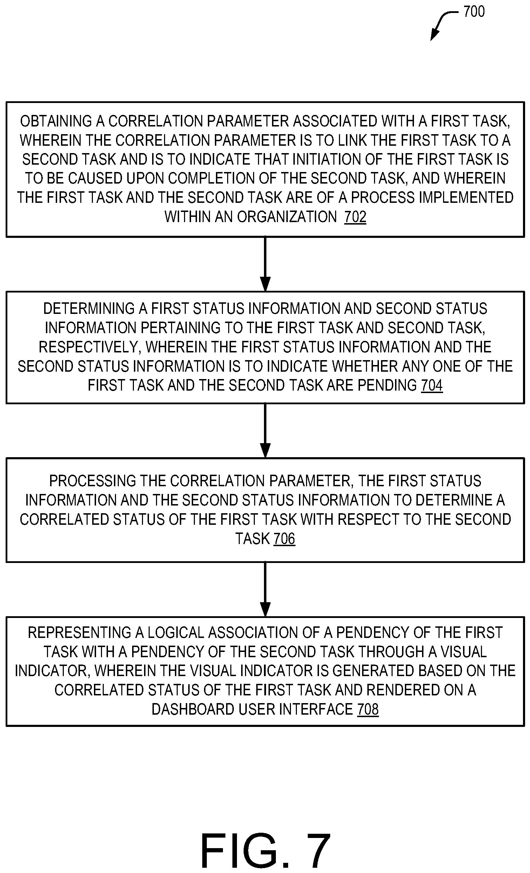

FIG. 7 illustrates a method for correlating tasks across different monitored processes, as per an example. The order in which the above-mentioned method is described is not intended to be construed as a limitation, and some of the described method blocks may be combined in a different order to implement the method, or an alternative method.

Furthermore, the above-mentioned method may be implemented in a suitable hardware, computer-readable instructions, or combination thereof. The steps of such method may be performed by either a system under the instruction of machine executable instructions stored on a non-transitory computer readable medium or by dedicated hardware circuits, microcontrollers, or logic circuits. For example, the method may be performed by a workflow and task management system, such as system 210. In an implementation, the method may be performed under an "as a service" delivery model, where the system 210, operated by a provider, receives programmable code. Herein, some examples are also intended to cover non-transitory computer readable medium, for example, digital data storage media, which are computer readable and encode computer-executable instructions, where said instructions perform some or all the steps of the above-mentioned methods.

In an example, the method 700 may be implemented by the system 210 for determining a correlation between tasks within a workflow, wherein one or more of such tasks may be pending. The present method 700 is explained from the perspective of a first task and a second task, wherein both the first task and the second task are part of a process implemented within an organization. Although the present explanation is provided in relation to the first task and the second task, these approaches may also be applicable for a greater number of tasks. Such implementations too would fall within the scope of the present subject matter.

At block 702, a correlation parameter associated with a first task may be obtained. In an example, the correlation parameter is to link the first task to a second task and is to indicate that initiation of the first task is to be caused upon completion of the second task. For example, the task engine 312 may determine the correlation based on correlation parameter 316. The correlation parameter 316 may depict whether completion of any given task, say task 204-3 is contingent or dependent on completion of another related or dependent task, such as task 204-2. The correlation parameter 316 may be defined by way of linking said tasks by an administrator or may be prescribed by way of programming implementing a workflow which defines the process to be implemented.

At block 704, a first status information and second status information pertaining to the first task and second task, respectively, may be determined. In the present instant the first status information and the second status information indicate whether any one of the first task and the second task are pending. For example, the task engine 312 may determine status information 318 of the task 204-2 and the task 204-3. The status information 318, in turn may indicate the status of the corresponding tasks. For instance, the status information 318 may depict whether any one or more of the tasks 204 are pending or have completed.

At block 706, the correlation parameter along with the first status information and the second status information may be processed to determine a correlated status of the first task with respect to the second task. For example, task engine 312, once the status information 318 of the task 204-2 and the task 204-3 is determined, may process the same along with the correlation parameter 316 to determine the correlated status 320 of the task 204-2 and the task 204-3. The correlated status 320 indicates whether the pendency of any given task is due to the pendency of another related task. If the corelated task 204-2 and the task 204-3 are pending, the correlated status 320 may depict that the pendency of the task 204-3 is due to the pendency of the task 204-2. The correlated status 320 may be captured as a flag or a similar variable value within the system 210. Continuing further, the correlated status 320 may be set (say to '1') if the task 204-2 and the task 204-3 are pending and indicating that the task 204-3 may be pending because the task 204-2 has not yet been completed.

At block 708, a visual indicator may be generated based on the correlated status. The visual indicator is to provide a logical association linking the pendency of the first task with the pendency of the second task. The visual indicator may be provided on a user interface. For example, the task engine 312 may, based on the correlated status 320, generate and render the indicator 322. The indicator 322 may be rendered onto the display device 212 which may be communicatively coupled with the system 210. The indicator 322 thus rendered is to depict a logical association of a pendency of a first task, say task 204-3, with a pendency of another second task, say the task 204-2. It may be noted that the indicator 322 in such a case may link a visual representation of the task 204-3 to another visual representation of the task 204-2, indicating that the pendency of the task 204-3 is owing to, or linked with, the pendency of the task 204-2. The indicator 322 may be of different visual forms. For example, the indicator 322 may comprise a common shape, common color, common annotation, a notional connector, or a combination thereof.

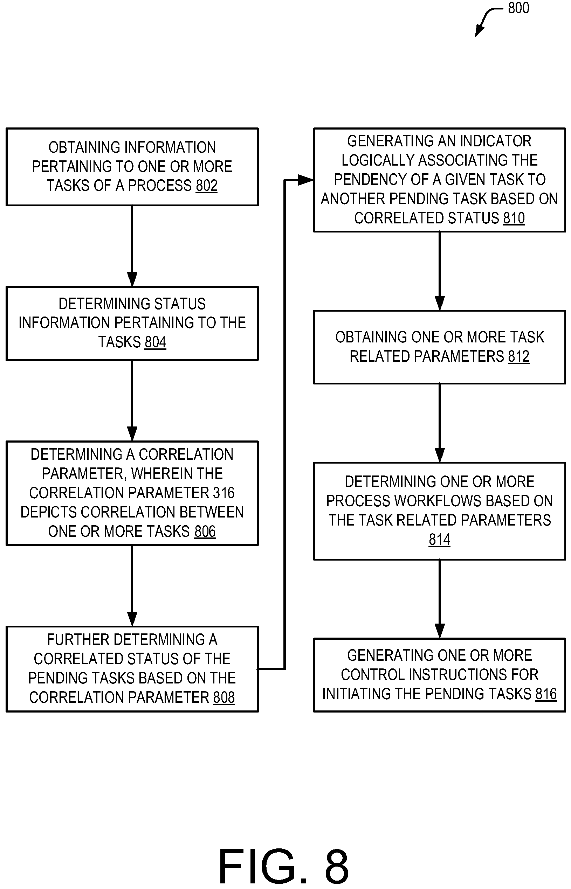

FIG. 8 illustrates another method for correlating tasks across different monitored processes, as per another example. The order in which the above-mentioned methods are described is not intended to be construed as a limitation, and some of the described method blocks may be combined in a different order to implement the methods, or alternative methods.

Furthermore, the above-mentioned methods may be implemented in a suitable hardware, computer-readable instructions, or combination thereof. The steps of such methods may be performed by either a system under the instruction of machine executable instructions stored on a non-transitory computer readable medium or by dedicated hardware circuits, microcontrollers, or logic circuits. For example, the methods may be performed by a workflow and task management system, such as system 210 or the system 102. In an implementation, the methods may be performed under an "as a service" delivery model, where the system 102 or system 210, receives programmable code. Herein, some examples are also intended to cover non-transitory computer readable medium, for example, digital data storage media, which are computer readable and encode computer-executable instructions, where said instructions perform some or all the steps of the above-mentioned methods.

At block 802, information pertaining to one or more tasks of a process being implemented in an organization, is obtained. For example, the task engine 312 may obtain information pertaining to the task 204-2 and task 204-3. In the present example, the task 204-2 corresponds to stage 202-1 whereas task 204-3 corresponds to stage 202-2. The task 204-2 and task 204-3 are being monitored by the monitoring applications 206-1 and 206-2, respectively, which may monitor the progress of the task 204-2 and task 204-3. The information pertaining to the task 204-2 and the task 204-3 may be obtained by the monitoring applications 206-1, 2 and stored in the repository 208. In an example, the information pertaining to the task 204-2 and task 204-3 may include metric information of such tasks. The metric information may provide values of attributes associated with the corresponding tasks. Examples of such attributes include, but are not limited to, status, dependency, identity of an initiating event, application, or user.

At block 804, status information pertaining to the tasks may be determined. The status information thus determined may indicate whether the corresponding task is pending or not. For example, the task engine 312 may determine whether the task 204-2 and the task 204-3 are pending based on the metric information, as obtained by the one or more monitoring applications 206. In an example, the information pertaining to the different tasks may include status information 318 corresponding to the task 204-2 and the task 204-3. The status information 318 of the task 204-2 or task 204-3 are pending based on the status information 318.

At block 806, a correlation between one or more tasks may be determined. For example, the task engine 312 may process the information, e.g., metric information, of the corresponding tasks to determine whether the task 204-2 and task 204-3 are correlated. In an example, the correlation may be determined based on correlation parameter 316. The correlation parameter 316 may depict whether completion of any given task is contingent or dependent on completion of another related or dependent task. As may be understood, within any process which comprises multiple stages, an output of one stage may be utilized or provided as an input for another stage. The correlation parameter 316 may be defined by an administrator or may be defined based on one or more predefined rules. Other examples by way of which the correlation parameter 316 may be defined may also be implemented without deviating from the scope of the present subject matter.

At block 808, a correlated status of the pending tasks may be determined. For example, the task engine 312 may process the status information 318 of the task 204-2 and task 204-3, and the correlation parameter 316 between the task 204-2 and task 204-3, to determine the correlated status 320. The correlated status 320, in an example, may depict whether the pendency of any given task is due to the pendency of another related task. As also explained previously, if the corelated task 204-2 and the task 204-3 are pending, the correlated status 320 may depict that the pendency of the task 204-3 is owing to the pendency of the task 204-2. In an example, the correlated status 320 may be represented as a flag, variable or such similar indicators.

At block 810, the correlated status may be used for generating an indicator logically associating the pendency of a given task to another pending task. For example, the task engine 312 may generate the indicator 322 onto the display device 212 coupled with the system 210. Amongst other things, the indicator 322 depicts a logical association of a pendency of a first task, say task 204-3, with a pendency of another second task, say the task 204-3. It may be noted that the indicator 322 in such a case may also link a visual representation of the task 204-3 to another visual representation of the task 204-2, indicating that the pendency of the task 204-3 is owing to, or linked with, the pendency of the task 204-2. The indicator 322 may be in different visual forms. For example, the indicator 322 may comprise a common shape, common color, common annotation, a notional connector, or a combination thereof.

At block 812, one or more task related parameters may be obtained. For example, the task engine 312 may obtain one or more task related parameters corresponding to the task 204-2. As discussed previously, task related parameters may be stored as task related parameter(s) 324 within the system 210. Examples of such task related parameter(s) 324 include, but are not limited to, operational settings or configurations (e.g., nature of input data, operational parameters for the task 204-2, etc.) based on which the task 204-2 may be implemented. The task related parameter(s) 324 may also include parameters such as priorities, details of stage, available resources, dependencies on other tasks, etc. In an example, the task related parameter(s) 324 could also include various performance indicators that may be relevant to the task 204-2.

At block 814, one or more process workflows may be determined based on the task related parameters. For example, the task engine 312 may identify one or more process workflows based on the task related parameter(s) 324. The process workflows thus determined may include one or more steps that may have to be performed for completion of any given task. In relation to the task 204-2, the task engine 312 may determine the process workflows based on the task related parameter(s) 324 corresponding to the task 204-2. In a similar manner, the task engine 312 may determine the process workflows for the task 204-3 based on the task related parameter(s) 324 corresponding to the task 204-3. In an example, the process workflows may be predefined and stored as task workflow(s) 326.

At block 816, one or more control instructions for initiating the pending tasks, may be generated. For example, the task engine 312 on determining the corresponding task workflow(s) 326, may generate one or more control instructions. The control instructions are such that when executed may cause initiation of the task 204-2. Once the task 204-2 is completed, the task 204-3 (which was pending owing to the pendency of the task 204-2) may accordingly commence. The task workflow(s) 326 may be defined by an administrator of the system 210. In another example, the task workflow(s) 326 may be generated using a variety of systems or tools, examples of which include, but are not limited to, tools for workflow automation, business process management (BPM) software, or the like. Once completed, the task 204-2 may be annotated with one or more visual prompts to indicate its completion. Alternatively, another visual indication may also be used without deviating from the scope of the present subject matter.

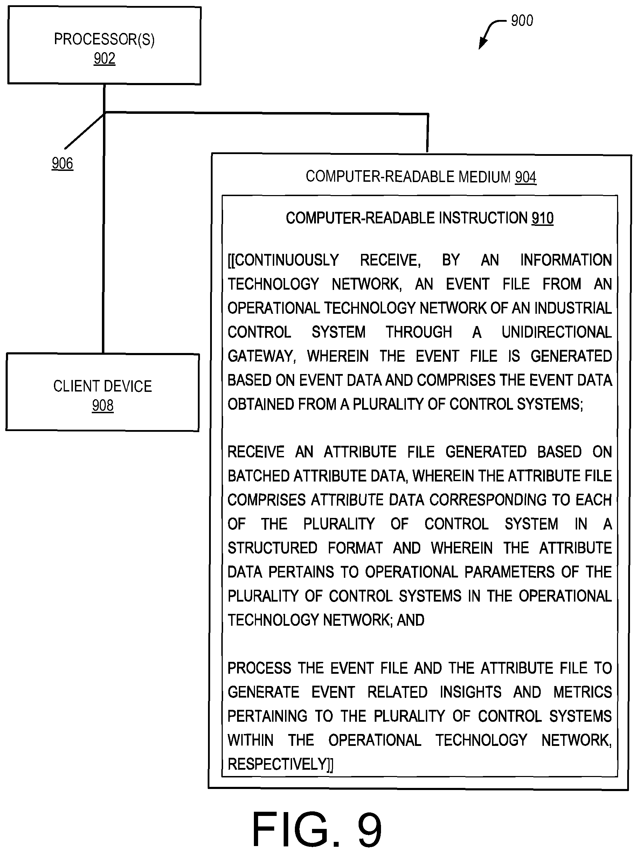

FIG. 9 illustrates a computing environment 900 implementing a non-transitory computer readable medium for processing files comprising data corresponding to plurality of control systems for managing alarms in an industrial system. In an example, the computing environment 900 includes processor(s) 902 communicatively coupled to a non-transitory computer readable medium 904 through a communication link 906. In an example implementation, the computing environment 900 may be for example, the system 210. In an example, the processor(s) 902 may have one or more processing resources for fetching and executing computer-readable instructions from the non-transitory computer readable medium 904. The processor(s) 902 and the non-transitory computer readable medium 904 may be implemented, for example, in event processor 218 (as has been described in conjunction with the preceding figures).

The non-transitory computer readable medium 904 may be, for example, an internal memory device or an external memory device. In an example implementation, the communication link 906 may be a network communication link. The processor(s) 902 and the non-transitory computer readable medium 904 may also be communicatively coupled to a computing device 908 over the network.

In an example implementation, the non-transitory computer readable medium 904 includes a set of computer readable instructions 910 (referred to as instructions 910) which may be accessed by the processor(s) 902 through the communication link 906. Referring to FIG. 9, in an example, the non-transitory computer readable medium 904 includes instructions 910 that cause the processor(s) 902 to provide a dashboard user interface onto a display device, such as display device 212, coupled to a system, such as the system 210. In an example, the dashboard user interface may be the example user interface 400 (as described in conjunction with FIG. 4).

Amongst other things, the dashboard user interface (e.g., the user interface 400) may depict one or more tasks, such as the tasks 204. The tasks 204 may be part of a process which is implemented within an organization. In an example, the tasks 204 may include a first task, such as the task 204-2, and a second task, such as the task 204-3. The instructions 910 may further cause a correlation parameter (such as the correlation parameter 316) associated with the first task (e.g., the task 204-2) to be retrieved. In an example, the correlation parameter 316 is to link the task 204-2 to the second task (i.e., the task 204-3). In addition, the correlation parameter indicates that the initiation of the task 204-2 is to be caused upon the completion of the task 204-3. It may be noted that the dependency of the task 204-2 onto the task 204-3 is an example. The task 204-3 may be dependent on the task 204-2 (or any of the tasks 204) without deviating from the scope of the present subject matter.

Once the correlation parameter 316 is determined, the instructions 910 when executed are to determine first status information and second status information pertaining to the first task and the second task. In an example, the first status information and the second status information may be captured as status information 318, for the task 204-2 and the task 204-3. In an example, the status information 318 is to indicate the status of the task 204-2 or the task 204-3 (i.e., whether the tasks are pending, completed, etc.).

Once the status information 318 is determined, the instructions 910 when processed may cause the correlation parameter 316, along with the status information 318 of the task 204-2 and task 204-3 to determine a correlated status, such as the correlated status 320. The correlated status 320, in an example, may be used to depict whether the pendency of any given task is due to the pendency of another related task. If the corelated task 204-2 and the task 204-3 are pending, the correlated status 320 may depict that the pendency of the task 204-3 is owing to the pendency of the task 204-2.

The instructions 910, on determining the correlated status 320, may accordingly generate a visual indicator on the dashboard user interface based on the correlated status of the first task (e.g., task 204-2). The visual indicator, i.e., the indicator 322 is to depict a logical association of a pendency of the task 204-2 with a pendency of the task 204-3.

Although examples for the present disclosure have been described in language specific to structural features and/or methods, it is to be understood that the appended claims are not necessarily limited to the specific features or methods described. Rather, the specific features and methods are disclosed and explained as examples of the present disclosure.

## Claims

1. A system comprising:
a processor; and
a machine-readable storage medium comprising instructions executable by the processor to:
for a first task and a second task of a process implemented within an organization, obtain a correlation parameter associated with the first task, wherein the correlation parameter is to link the first task to the second task and is to indicate that initiation of the first task is to be caused upon completion of the second task;
determine a first status information and second status information pertaining to the first task and second task, respectively, wherein the first status information and the second status information is to indicate whether any one of the first task and the second task are pending;
process the correlation parameter, the first status information and the second status information to determine a correlated status of the first task with respect to the second task; and
cause to generate a visual indicator based on the correlated status of the first task, wherein the visual indicator is to depict a logical association of a pendency of the first task with a pendency of the second task.

2. The system as claimed in claim 1, wherein the instructions are executable to further:
generate a control instruction if the second status information is to indicate that the second task is pending, wherein the control instruction when executed is to cause initiation of the second task; and
monitor the second status information to ascertain completion of second task.

3. The system as claimed in claim 2, wherein to generate the control instruction, the instructions are executable to further:
determine a task related parameter corresponding to the second task;
identify a process workflow comprising an underlying parameter corresponding to the task related parameter; and
generate the control instruction based on the identified process workflow.

4. The system as claimed in claim 2, wherein on completion of the second task, the instructions are executable to cause one of:
generate a visual prompt for a user of the system, wherein the visual prompt is to intimate completion of the second task and to initiate the first task; and
generate another control instruction, wherein the other control instruction is to initiate the first task, another set of tasks, or a combination thereof.

5. The system as claimed in claim 1, wherein the correlation parameter associated with the first task is defined based on one of a user input and a set of predefined rules, wherein the predefined rules specify a set of criteria related to the first task and the second task.

6. The system as claimed in claim 1, wherein the correlation parameter associated with the first task is determined based on a machine learning based correlation model, wherein the correlation model is trained based on training data comprising a set of training tasks with each of the set of training tasks linked to a corresponding dependent task.

7. A method comprising:
obtaining a correlation parameter associated with a first task, wherein the correlation parameter is to link the first task to a second task and is to indicate that initiation of the first task is to be caused upon completion of the second task, and wherein the first task and the second task are of a process implemented within an organization;
determining a first status information and second status information pertaining to the first task and second task, respectively, wherein the first status information and the second status information is to indicate whether any one of the first task and the second task are pending;
processing the correlation parameter, the first status information and the second status information to determine a correlated status of the first task with respect to the second task; and
representing a logical association of a pendency of the first task with a pendency of the second task through a visual indicator, wherein the visual indicator is generated based on the correlated status of the first task and rendered on a dashboard user interface.

8. The method as claimed in claim 7, wherein the method comprises:
generating a control instruction to cause initiation of the second task upon second status information indicating that the second task is pending; and
monitoring the second status information to ascertain completion of second task.

9. The method as claimed in claim 8, wherein the generating the control instructions comprises:
determining a task related parameter corresponding to the second task;
identifying a process workflow comprising an underlying parameter corresponding to the task related parameter; and
generating the control instructions based on the identified process workflow.

10. The method as claimed in claim 8, wherein the method comprises generating an intermediate authorization credential for the user on ascertaining that the user is not authorized to access any one of the first task and the second task, wherein the intermediate authorization credential is generated based on an organizational role of the user, historical access data representing that the user has previously accessed one of the first task and the second task a predefined number of times, predefined rules defining a set of access parameters, a determined workload of the user, or combination thereof.

11. The method as claimed in claim 7, wherein the method comprises:
rendering the dashboard user interface onto a communicatively coupled display, wherein the dashboard user interface is to provide:
a first display element corresponding to a first monitoring application monitoring the first task; and
a second display element corresponding to a second monitoring application monitoring the second task.

12. The method as claimed in claim 11, wherein the rendering the dashboard user interface comprises:
determining a user identifier of a user seeking to interact with the dashboard user interface;
providing, onto the dashboard user interface, an information section, and an element section, wherein the element section lists a set of dynamic information elements, static information elements, and control elements, wherein the set of dynamic information elements, static information elements, and control elements is provided based on the user identifier;
receiving a selection, through user input from the user, of an element from the set of the dynamic information elements, the static information elements, and the control elements; and
adding the element, in response to the selection received through the user input, to the information section.

13. A non-transitory computer-readable medium comprising instructions, the instructions being executable by a processing resource of a system, to:
provide a dashboard user interface onto a display coupled to the system, wherein the dashboard user interface is to depict a first task and a second task of a process implemented within an organization;
retrieve a correlation parameter associated with the first task, wherein the correlation parameter is to link the first task to the second task and is to indicate that initiation of the first task is to be caused upon completion of the second task;
determine a first status information and second status information pertaining to the first task and second task, respectively, wherein the first status information and the second status information is to indicate whether any one of the first task and the second task are pending;
process the correlation parameter, the first status information and the second status information to determine a correlated status of the first task with respect to the second task; and
generate a visual indicator on the dashboard user interface based on the correlated status of the first task, wherein the visual indicator is to depict a logical association of a pendency of the first task with a pendency of the second task.

14. The non-transitory computer-readable medium as claimed in claim 13, wherein the instructions being executable are to:
determine a task related parameter corresponding to the second task;
identify a process workflow comprising an underlying parameter corresponding to the task related parameter;
generate the control instructions based on the identified process workflow, wherein control instructions are to cause initiation of the second task upon second status information indicating that the second task is pending; and
monitor the second status information to ascertain completion of the second task.

15. The non-transitory computer-readable medium as claimed in claim 14, wherein the instructions being executable are to:
determine a task related parameter corresponding to the first task, upon completion of the second task;
identify a process workflow comprising an underlying parameter corresponding to the task related parameter;
generate the control instructions based on the identified process workflow, wherein control instructions are to cause initiation of the first task as the second status information indicates that the second task is completed; and
monitor the first status information to ascertain completion of first task.
